# EUROPEAN PATENT APPLICATION

(11) **EP 1 227 387 A1**
(43) Date of publication of application: **31.07.2002**
(21) Application number: 01200265.5
(22) Date of filing: 23.01.2001
(51) Int. Cl.: G06F 1/16

(54) **Notebook computer**

(71) Applicant: PaceBlade Technology Corporation, Nei-Hu, Taipei (TW)
(72) Inventor: Lyngemark, Per Anders, 114 Taipei (TW); Djie, Eric Johan, 114 Taipei (TW)
(74) Representative: Metman, Karel Johannes

(57) **Abstract**

There is disclosed a notebook computer, comprising main electronics, a keyboard casing part (8) and a display casing part (7). A keyboard is mounted on the keyboard casing part and a display (13) is mounted to the display casing part. The casing parts (7, 8) are separate loose parts and have wireless transmission such that they can be used at a distance from each other. The main electronics is housed in the display casing part and the electronics is adapted such that the display casing part can be used independently of the keyboard casing part, i.e. as a tablet computer. The display (13) and the electronics are adapted to use the display in two 90° rotationally shifted positions.

## Description

The present invention relates to portable or Notebook computers.

The personal computer plays a big role in the professional and private life of many people. Historically computer users would use a desktop computer for daily work and would have a notebook computer on the side for traveling or on-the-road work or presentations. Notebook computers were too expensive and the performance lagging behind that of desktop computers to be considered as a replacement of desktop computers.

Because of the advances in technology the performance gap between portable- and desktop computers has almost vanished. This explains the faster growth of the notebook-market compared with the desktop-market. Notebook computers are more and more replacing desktop computers. Even though prices of notebook computers have come down a premium for portability still exists today. This can be justified because the notebook computer can be used both at work and in the office taking away the need to own two desktop computers. The convenience of having access to all files at the notebook computer is a great advantage to the usage of two desktop computers.

A growing group of computer users are therefore using a notebook computer as their only computer and a big group of users are therefore experiencing the issues surrounding the conventional Notebook computer and are more and more exposed to the risks of continued use of a device that has been designed for incidental use only.

Current notebook computer design configurations have flaws for ergonomics that is leading to higher incidence of discomfort, injury and therefore reduced personal well-being and corporate economical losses. Also current notebooks are vulnerable for damage leading to loss in productivity and big corporate economical losses.

Prior art documents disclosing special types of Notebook computers include US-A-5,355,279; US-A-5,729,429 and WO-A-00/58818.

The object of the present invention is to provide an improved Notebook computer.

To obtain this objective, the invention is characterized by the features of one or more of the accompanying claims.

According to one aspect of the present invention the display and the keyboard are separated physically (or in which the keyboard and display casing parts can be disconnected). The electronics of the computer are combined with the display in the display casing part. The display casing part can have means to enable this part to stand upright in different positions. (Or being mounted on table, wall, ceiling, in cars, trucks etc.)

The electronic connection between the keyboard and the computer part can be by a cable or wireless.

The invention provides several improvements in the field of usability, comfort/level of experienced physical stress and reliability/damage protection.

The separation of keyboard and display casing parts makes it possible to position the display at the most comfortable viewing distance and angle. This is likely to prevent discomfort, fatigue and strain on eyes and tension in neck and shoulder muscles.

The keyboard can be ergonomically designed because there is no mechanical relationship with the electronics of the main system. The keyboard can therefore have design features that prevent ergonomical problems.

There is no hinge between the display and keyboard casing parts. Therefore the total structure has less chance of breaking.

Because the keyboard casing part of the unit does not house the electronics of the system any spilling of fluids on it will not lead to major damages. In the worst case the keyboard has to be replaced which can be done very quickly at a fraction of the cost of the total system.

A preferred embodiment includes a sensor layer on top of the display that has two functions:
- Because of the sensor the display casing part can be used without the use of a keyboard at all. In fact the sensor enables the user to "click" on icon "buttons" directly by pressing on the sensor where it is displayed graphically. This makes the use of the computer much easier and more intuitive. If separated from the keyboard the display casing part becomes a tablet type of computer that can be used while standing and walking and in many situations where a tabletop is not available to rest the unit on.
- The sensor which is made of glass or the like provides protection from damage of the display.

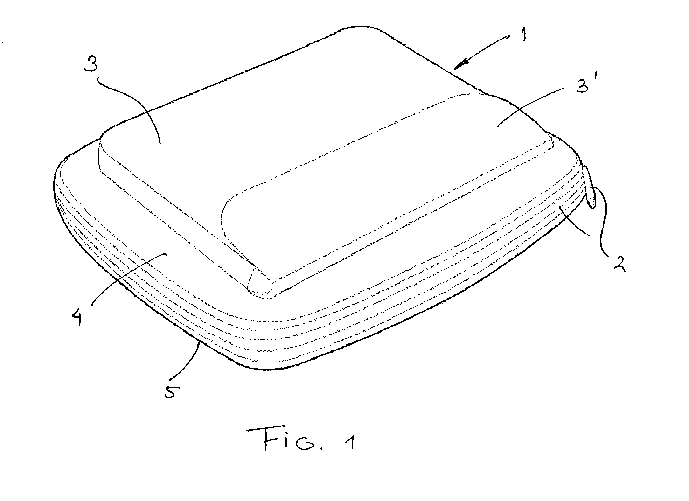

To ensure protection during transportation of the system the keyboard casing part can be placed on top of the display (Fig. 1A). For extra convenience to the user the display and keyboard casing parts can be made easily connect/disconnect- able. For the later function a number of different types of buckles or snap-on mechanisms can be used.

An envelope of leather or fabric that covers the display casing part leaving the display open for viewing as described above can also provide the protection. The keyboard casing part can be clicked/snapped/buckled onto this envelope.

The invention also provides means for the display casing part to stand up in both landscape and portrait orientation.

The tablet notebook unit can be transported in a special cover in which both casing parts have a fixed position. On opening the cover the computer is immediately available to be used as a notebook computer in landscape orientation. Turning the display casing part 90 degrees makes the display available in portrait orientation. One can also decide to only take the display casing part out of the cover and use it as a tablet computer for document viewing/web browsing, pen/finger- or voice input. The unit can be used as a portable desktop solution in which the keyboard is used at an ideal distance from the display. The unit is still in the cover therefore easily packed and unpacked. When stationary use is preferred like at home or in the office the unit can be placed on the table using a stand. In this configuration it has all the advantages of a very small footprint computing unit. The portrait orientation is ideal for typing letters (because the total A4 or legal size document can be displayed and viewed in one glance) and many other applications.

The invention will hereafter be further explained with reference to the drawings showing an exemplary embodiment of the Notebook computer according to the invention.

Fig. 1 is a perspective view of the Notebook computer according to the invention, showing the cover in closed position.

Fig. 2 is a perspective view of the Notebook computer of fig. 1 in open, operational position of the cover with the casing parts of the computer fixed to the cover.

Fig. 3 is a perspective view corresponding to that of fig. 2, in which the display casing part of the computer is turned 90° into portrait orientation.

Fig. 4 is a perspective view of the Notebook computer without the cover but in an operational position.

Fig. 5 is a prospective view of the display casing part of the Notebook computer used as a pen or tablet computer.

Fig. 1 shows a cover 1 in the closed position in which it covers the Notebook computer in order to protect it for transport and storage. The cover can be closed by a zipper 2 and has means that act as integrated support. In this exemplary embodiment the support 3 is combined with an outer pocket 3'. The cover 1 may be made of leather or fabric, but could also be made of more rigid plastic or other material.

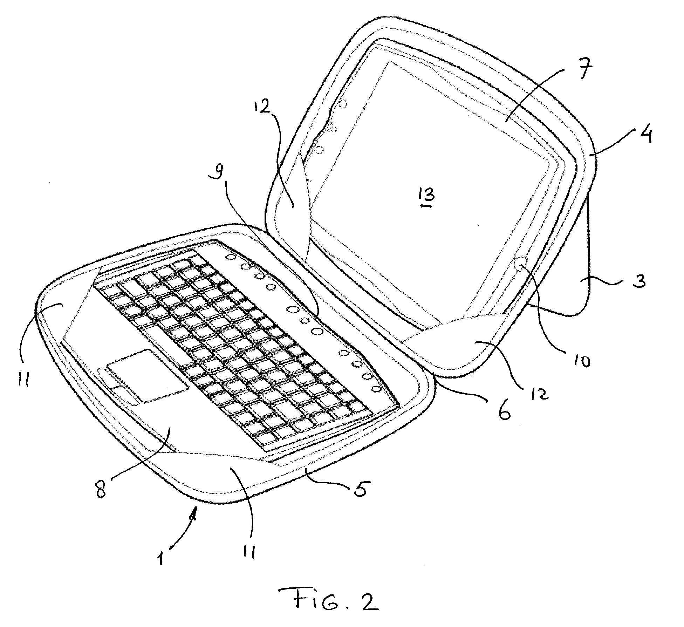

Fig. 2 shows the cover 1 in open or operational position in which a display cover part 4 and a keyboard cover part 5 are pivoted around a folding pivot 6. The display cover part 5 is supported by the support 3 which is moved to a support position. The support 3 is a more or less rigid plate that is pivotally fixed to the display cover part 5 and can be locked in one or more positions in order to support the display cover part 5 at different angles. It would also be possible to pivot both cover parts 4, 5 such that the keyboard cover part 4 is below the support 3'.

As is clearly shown in fig. 2, the Notebook computer comprises separate loose casing parts, i.e. a display casing part 7 and a keyboard casing part 8. The casing parts 7, 8 may be made of magnesium, or other metal or plastic. The keyboard casing part 8 is very flat and only contains the electronics necessary to allow the functioning of the keyboard and to provide an electronic connection with the electronics in the display casing part 7. The electronic connection between both casing parts 7 and 8 can be done through a wire or wireless as in this case through infrared transmission illustrated by a transmitter 9 and a receiver 10. The keyboard cover part 5 includes means to hold the keyboard casing part 8 to the cover part, such as corner tabs 11 and/or snap connections. The display casing part 7 is held in a similar way with corner tabs 12 and/or snap connections. As mentioned above, the display cover part 5 may be arranged with the keyboard cover part 4 positioned below the support 3'. In that case, the keyboard casing part 8 is taken out of the cover 1 and may be positioned at a distance from the display casing part 7.

The display casing part 7 includes the main electronics of the Notebook computer such a the CPU, hard disk and auxiliary hardware and electronics. It also contains a room to accommodate an accumulator, such as a rechargeable battery. According to the invention, the display casing part 7 is provided with a power-out socket to supply power to external peripherals, such as CR-ROM and DVD players, and the like. This socket is connected directly to the accumulator and thus the Notebook computer has an on-board power supply.

The display casing part 7 includes a large display 13 which is covered by a resistive touch sensor for both finger and pen input. Due to this possibility, the display casing part 7 of the notebook computer can be used without the keyboard casing part 8 and is therefore adapted to be used as a tablet computer. This touch sensor is normally made of glass which protects the display as well.

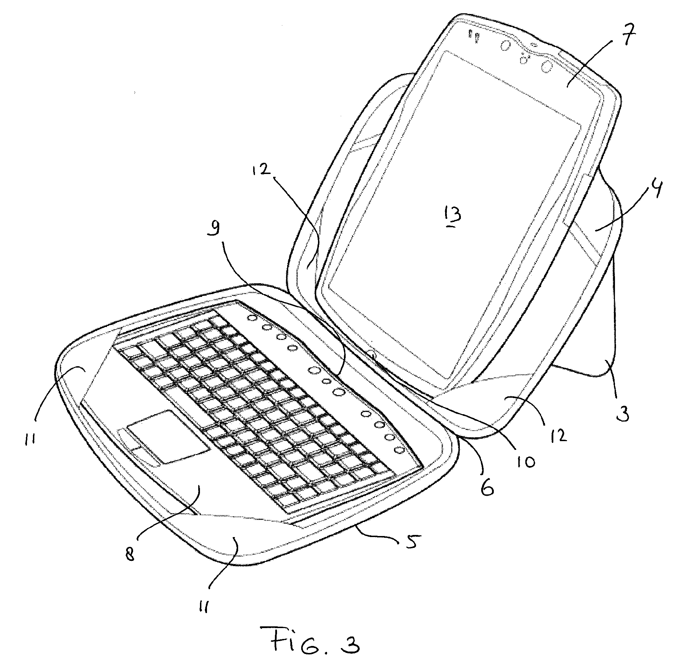

Fig. 3 shows that the display casing part 7 can be turned 90° from the landscape orientation in order to be used in portrait orientation. The display casing part 7 can be held with the same corner tabs 12. Additional or supplementary holding means could be provided, for example means to support the upper side of the display casing part at a (variable) distance from the cover part 5. This makes it possible to change the viewing angle but it also enables heat to escape from the back of the display casing part 7.

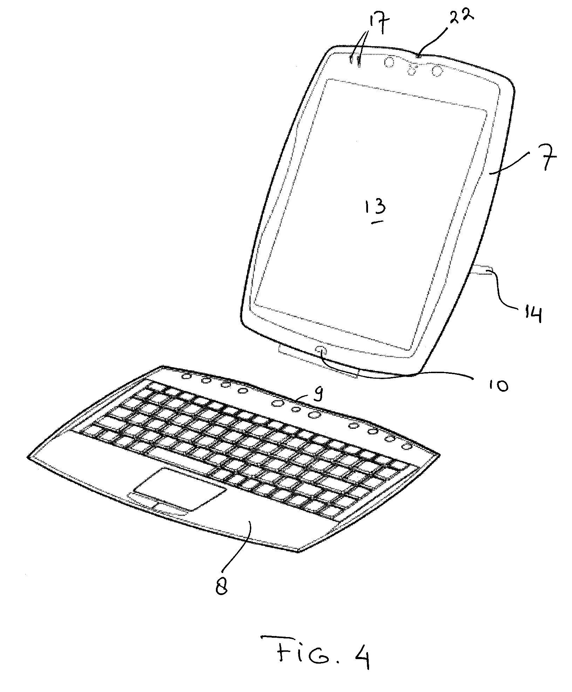

Fig. 4 shows the display and keyboard casing parts 7 and 8 without the cover 1. In this way, the display casing part 7, which has a separate support 14 to hold it in an upright position, can be positioned independently of the keyboard casing part 8 at a comfortable viewing distance. Support 14 can be adapted to support the display casing part 7 at different angles. The keyboard casing part 7, which has an independent power supply, preferably through batteries, may have a special power down function in order to reduce the power consumption when the keyboard is not used a specified period of time. Especially, if the keyboard casing part includes a touch pad, this is a convenient feature as touch pads have a relatively constant (high) power consumption.

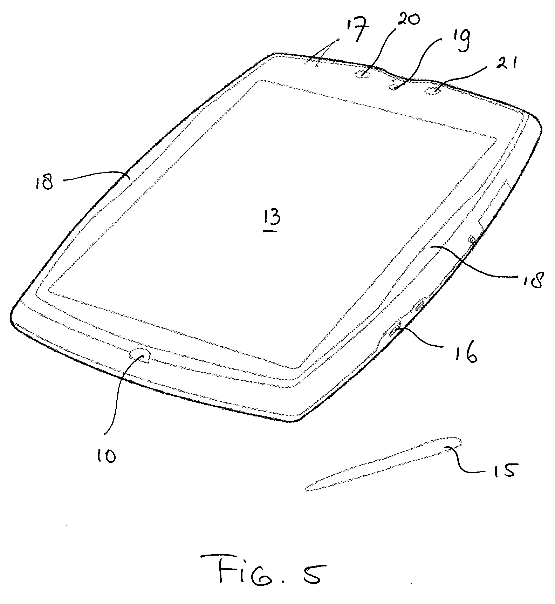

Fig. 5 shows the display casing part 7 with a stylus 15 to illustrate that the display casing part 7 can be used independently as a tablet computer. Besides the pen or finger input, it can also have other input controls, such as a scroll wheel 16 to use the computer as an electronic book or to scroll through menu's and pages, a microphone 17 in order to control it by voice control, and it would also be possible to use a separate remote control, for example for presentations and the like.

Fig. 5 further shows speakers 18 a power button 19 a landscape/portrait toggle 20, a menu button 21 and several connectors. The menu button is intended to get direct finger access to menu's on the display. Two display casing parts may be electronically coupled in order to simultaneously display two pages of the same or a different programs of the Notebook computer.

As shown in Fig. 4, the display casing part 7 could comprise a multifunctional camera port 22. A camera can be mounted and connected through this port and could be rotated 360°. The camera can be used for picture viewing, video conferencing etc.

The display casing part 7 of the Notebook computer may be provided with a removable grip in order to hold the tablet computer in a comfortable manner. The grip may be attachable to the bottom side of the casing, but also a mount on the side of the casing would be possible.

The bottom side of the display casing part may be provided with a universal bracket hole, for example a 3/8" screwthreaded hole which is also used on professional camera's. This hole can be used to fix suspension or support means to the display casing part. With such means the display casing part may be easily placed on a table, mounted to the wall, or clicked to a counter means that is, for example, fixed to the dashboard of a vehicle, to a table or wall in a boat or plane, or to other support means.

From the foregoing it will be clear that the invention provides a Notebook computer which shows excellent properties regarding usability, comfort/level of experienced physical stress and reliability/damage protection.

The invention is not limited to the exemplary embodiments described before and shown in the drawing and may be varied within the scope of the claims.

## Claims

1. Notebook computer, comprising main electronics, a keyboard casing part and a display casing part, a keyboard mounted on the keyboard casing part, and a display mounted to the display casing part, said casing parts being constructed such and having such electronic connection that they can be used at a distance from each other, **characterized in that** the main electronics is housed in the second casing part.

2. Notebook computer according to claim 1, wherein the casing parts are constructed as separate loose parts.

3. Notebook computer according to claim 2, including a cover comprising fixation means to hold the casing parts.

4. Notebook computer according to claim 3, wherein the cover is transferable between a covering position for storage and transport of the computer and a use position in which the computer can be used.

5. Notebook computer according to claim 4, wherein the cover includes two pivoting cover parts enabling the cover parts to pivot with respect to each other and further including support means to support the cover parts in at least one position in which it supports at least the second casing part in an upright position.

6. Notebook computer according to claim 5, wherein the support means is adapted to support the keyboard casing part in at least one inclined use position.

7. Notebook computer according to one of the preceding claims, wherein the display and the electronics are adapted to use the display in two 90° rotationally shifted positions.

8. Notebook computer according to claims 4 and 7, wherein the fixation means is adapted to hold the display casing part and display in said two positions.

9. Notebook computer according to one of the preceding claims, wherein the electronic connection between the keyboard in the keyboard casing part and the electronics in the display casing part includes a wireless transmission.

10. Notebook computer according to claim 8, wherein the display is constructed as a touch screen and/or the electronics include a voice control.

11. Notebook computer, comprising main electronics, a keyboard casing part and a display casing part, a keyboard mounted on the keyboard casing part, and a display mounted to the display casing part, said casing parts being constructed such and having such electrical connection means that they can be used at a distance from each other, **characterized in that** the main electronics is housed in the display casing part and the electronics is adapted such that the display casing part can be used independently of the keyboard casing part.

12. Notebook computer according to claim 11, wherein the display is constructed as a touch screen and/or the electronics includes a voice control.

13. Notebook computer according to one of the preceding claims, wherein the electronics can be fed by an accumulator and the display casing part having a receiving space to accommodate the accumulator.

14. Notebook computer, comprising main electronics, a keyboard casing part and a display casing part, a keyboard mounted on the keyboard casing part, and a display mounted to the display casing part, said casing parts being constructed such and having such electrical connection means that they can be used at a distance from each other, **characterized in that** the display and the electronics are adapted to use the display in two 90° rotationally shifted positions.

15. Cover for a Notebook computer, comprising two pivoting cover parts enabling the cover parts to pivot with respect to each other and further including support means to support the cover parts in at least one position in which it supports at least the display casing part in an upright position.
